# EUROPEAN PATENT SPECIFICATION

(11) **EP 4 190 538 B1**
(45) Date of publication and mention of the grant of the patent: **06.08.2025**
(21) Application number: 22211066.0
(22) Date of filing: 02.12.2022
(51) Int. Cl.: B29C 65/02, B29C 65/00, B29C 35/02, B31B 70/74, B29B 13/02, B29C 71/02, B31B 50/62, B29L 31/00, B29K 23/00, B29K 67/00, B31B 155/00, B31B 170/20

(54) **METHOD OF MANUFACTURING A STRIP FOR SEALING A LAMINATED PACKAGING MATERIAL FOR LIQUID FOOD PRODUCTS**
VERFAHREN ZUR HERSTELLUNG EINES STREIFENS ZUM VERSIEGELN EINES LAMINIERTEN VERPACKUNGSMATERIALS FÜR FLÜSSIGE LEBENSMITTELPRODUKTE
PROCÉDÉ DE FABRICATION D'UNE BANDE POUR SCELLER UN MATÉRIAU D'EMBALLAGE STRATIFIÉ POUR PRODUITS ALIMENTAIRES LIQUIDES

(30) Priority: 03.12.2021 EP 21212325
(43) Date of publication of application: 07.06.2023
(73) Proprietor: Tetra Laval Holdings & Finance S.A., 1009 Pully (CH)
(72) Inventor: FANTINI, Stefano, 41123 Modena (IT)
(74) Representative: Tetra Pak Patent Attorneys

(56) References cited:
- EP-A1- 3 590 713
- EP-A1- 3 674 059
- EP-A2- 0 482 518
- EP-A2- 0 482 518
- CN-A- 109 605 881

## Description

### Technical Field

The invention relates to a method of manufacturing a strip for sealing a laminated packaging material for liquid food products.

### Background Art

Packaging containers of the single use disposable type for liquid foods are often produced from a packaging laminate based on paperboard or carton. Such packaging containers are often used for packaging of liquid foods, such as milk or fruit juices, that are sold for long term ambient storage. The packaging material in such known packaging containers is typically a laminate, comprising a bulk or core layer of paper, paperboard or other cellulose-based material and outer liquid-tight layers of thermoplastics. In order to render the packaging container gas-tight, in particular oxygen gas-tight for the purpose of aseptic packaging, the laminate in these packaging containers normally comprises an additional barrier layer, for example an aluminum foil.

The packaging containers are generally produced by means of modern highspeed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint created by welding together the inner- and outermost thermoplastic polymer layers, which are heat sealable. The tube is then filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, by fold formation along prepared crease lines in the packaging material.

Packaging containers for sensitive liquid food, for example milk or juice, can also be produced from sheet-like blanks or prefabricated blanks of the laminated packaging material. From a tubular blank of the packaging laminate that is folded flat, packages are produced by first of all building the blank up to form an open tubular container capsule, of which one open end is closed off by means of folding and heat-sealing of integral end panels. A thus closed container capsule is filled with the food product in question, e.g. juice, through its open end, which is thereafter closed off by means of further folding and heat-sealing of corresponding integral end panels. Such tubular blanks produced from sheet-like blanks or prefabricated blanks of the laminated packaging material may also comprise an overlap joint of the above described type. An example of a packaging container produced from sheet-like and tubular blanks is the conventional so-called gable-top package. There are also packages of this type, which have a molded top and/or screw cap made of plastic.

When any desired structure is formed from prefabricated blanks or a web of packaging material by uniting the longitudinal edges of the laminated packaging material in the overlap joint, a cross-section of the laminated packaging material lies free at the respective edge of the blank or web and reveals the different layers comprised inside the laminated packaging material.

However, upon filling of the packaging container with the liquid food product, the liquid food product may get in contact with these layers inside the laminated packaging material and affect them negatively, as those layers may not be liquid proof. This is for example the case with paper materials. This may lead to problems in terms of durability of the laminated packaging material due to deterioration of the laminate, which may also have an impact on the food hygiene.

It is therefore known to apply a strip of a sealing material, in particular of a polymer material, to the edge that is exposed to the liquid food product in order to prevent the liquid food product from affecting the layers inside the laminated packaging material.

Such strips are often made as laminates themselves and may comprise an inner surface layer, an outer surface layer and center layer. The different layers may be laminated to each other by their own material adhesion properties, for example by extrusion lamination or by additional adhesives applied to them, for example in wet lamination.

As sealing strips need to follow the contour of the respective edge to be sealed to achieve a proper sealing function, they need to feature good flexibility and therefore the respective strips tend to be rather thin. However, the deformation of the material upon application to the edge contour imposes mechanical stress on the strip. If the bonding between the different layers of the strip is not sufficiently strong, the required deformation may cause the layers of the strip to delaminate, which means the layers may be separated from each other at least in sections.

This causes problems with regard to the sealing function and there is a need for an improved sealing strip, accordingly.

Patent publication No. CN109605881A relates to manufacturing of a longitudinal sealing strip, involving film blowing and an orientation process including an annealing heat treatment step to anneal the polymers in the stretching operation.

Patent publication No. EP3590713A1 relates to a laminated packaging material for packaging of liquid food, which is improved for transversal heat sealing of a continuous form fill-seal tube of packaging material. Patent publication No. EP0482518A relates to a polypropylene film manufacturing method including an annealing step to increase the transparency of the film. The film consists of a mono-material of polypropylene.

Patent publication No. EP3674059A1 relates to the altering of the transparency/opacity in a multilayer material. The transparency is increased by heat treatment.

### Summary

It is now an objective of the present invention to at least partly overcome one or more of the above-identified limitations of the prior art. In particular, the present invention aims at providing an improved sealing strip, which is resistant against delamination of its layers and that can be manufactured at low technical effort.

To achieve these objectives, a first aspect of the invention refers to a method of manufacturing a strip for sealing a laminated packaging material for liquid food products according to independent claim 1.

In the method of the invention, a pre-manufactured strip comprising a plurality of layers made of polymer material is provided, said layers comprising at least an inner surface layer, an outer surface layer and center layer.

According to the invention, at least one of said inner and outer surface layers is exposed to a heat treatment effecting that a degree of transparency of the manufactured strip is increased with regard to the degree of transparency of the pre-manufactured strip.

This is based on findings by the applicant, according to which the pre-manufactured strip features a rather low degree of transparency due to bonding material inhomogeneity present in the joining interface of the different layers. As known in the art, the degree of transparency indicates the amount of light reaching though the strip and can therefore range from 0 (no light reaches through) to 1 (all light reaches through), whereas a degree of transparency is rather a theoretical case. The bonding material inhomogeneity of the pre-manufactured strip is for example a result of air entrapments and inhomogeneous allocation of strip material or adhesive created during the lamination process to pre-manufacture the strip. For that reason, the pre-manufactured strip normally appears opaque.

By the heat treatment, an annealing process is performed on the strip. This causes the bonding material inhomogeneity to be reduced, because air entrapments can be resolved and inhomogeneous material allocation can be smoothened. It shall be noted that herein it is referred to the pre-manufactured strip, as long as it has not yet been heat treated. Accordingly, it is referred to the manufactured strip or simply the strip, once the heat treatment has at least begun. As a result of the heat treatment, the degree of transparency is increased, thereby indicating an increase of bonding material homogeneity. This allows for visual inspection to verify that the desired technical effect has been achieved. It shall be noted, that even a little increase of the degree of transparency achieves an improvement according to the described mechanism to some extent. This means, the method of the invention is successfully carried out, once a higher degree of transparency can be measured on the manufactured strip relative the degree of transparency of the pre-manufactured strip, within the measurement accuracy achievable by known measurement methods to detect a degree of transparency. Such measurement methods are well known in the art. It is not necessarily required, but possible of course, to quantify the achieved increase of the degree of transparency. For the method of the invention, it is however sufficient to come up with a qualitative assessment in terms, whether the degree of transparency could be increased or not ("yes or no" decision). Based in that, the required assessment can be done by human eye visual inspection or by using a respective measurement device.

The main influencing factors to perform a successful heat treatment are the material of the pre-manufactured strip, wherein the different layers may comprise different polymer materials and may comprise additional adhesives there between, and further a strip surface temperature during the heat and a heat treatment duration.

A person skilled in the art is, based on the present disclosure, enabled to carry out experiments with different pre-manufactured strips, strip surface temperatures and heat treatment durations to identify preferable combinations of strips and heat treatment parameters in detail, wherein the above described effect to increase the degree of transparency is exploited best.

As a starting point for such experiments, a strip surface temperature of 140 °C can be created and the pre-manufactured strip can be exposed to that temperature for 2 s. This is a verified set of heat treatment parameters achieving the desired technical effect of the invention for a pre-manufactured strip with an inner and outer surface layer of polyethylene (PE) and a center layer of (polyethylene terephthalate) PET or ethylene vinyl alcohol (EVOH), wherein an adhesive in the form of polyester polyol adhesives is applied between the respective surface layers and the center layer.

From this starting point other specific heat treatment parameters can be explored in experiments to identify preferred variants in detail without any further technical problems. Therein, a higher temperature and/or higher duration of the heat treatment will in principle enhance the desired effect and a lower temperature and/or lower duration of the heat treatment will in principle lower the desired effect. It will be well understood by a skilled person that thermal material stress of the strip due to the heat treatment is limiting the available process window in the direction of higher temperature/duration values and a decrease of the desired effect on the degree of transparency is limiting the available process window in the direction of lower temperatures/duration values. Different temperatures/duration values may be explored for different strip materials.

A major advantage of the increased bonding material homogeneity of the strip after heat treatment is that a resistance of the strip against delamination of its layers is significantly increased, because the bonding of the different layers is significantly improved.

This can be verified in a delamination test, also referred to as peeling test. Therein, a sample strip is provided and immersed into oleic acid (130 ppm) at 40°C for four weeks to simulate a liquid food product environment. Then, a pulling force is applied in the longitudinal direction of the strip. This causes the material of the strip to stretch and since the different layers of the strip do not feature totally identic mechanical properties, a separation force acts on the joining area between the layers due to a different mechanical stress level in the different layers.

In an example, a reference strip as specified above (made of PE and PET/EVOH) has been pre-manufactured according to the prior art, which means without any heat treatment. The reference strip has been exposed to the peeling test. Then, an identic reference strip has been heat treated according to the method of the invention has been exposed to the peeling test.

In case of the reference strip according to the prior art, the separation force has caused the layers to separate/to peel at least in sections. The delamination has been detected at a pulling force around 250 N/m, wherein "m" refers to the width of the sample strip. The width is measured perpendicular the longitudinal direction of the strip, wherein the longitudinal direction is defined by the direction of the pulling force in the peeling test. If the pre-manufactured strip is made in a flow manufacturing process, the longitudinal direction normally coincides with a machine direction of the manufacturing process. In the above example, the width of the sample strip measures 7.5 mm. In case of the sample strip according to invention, no delamination of the layers could be detected before the strip has been torn apart entirely.

A person skilled in the art is, based on the present disclosure, enabled to carry out further experiments with different sample strips and the above described testing method in order to identify a required degree of transparency that indicates a sufficient resistance against delamination.

With this said, the method of the invention provides a simple way of manufacturing sealing strips with a resistance against delamination tailored to the requirements of a particular product.

The pre-manufactured strip can generally be achieved by any lamination or extrusion process, wherein the inner and outer surface layers are applied to the center layer. Preferably, this happens in a process wherein a web of these layers is manufactured, preferably by lamination. The web may feature relatively large dimensions, for example 2.5 m by 3.8 m. In principle, a web may be considered a large pre-manufactured strip and the heat treatment according to the invention can be done on the web. However, to achieve a more even and balanced allocation of the heat on the web surface and to reduce the technical complexity of the heat treatment, the dimensions of the pre-manufactured strip are preferably reduced.

Therefore, the large web is preferably slit into lanes. This may also be done in iterations to reduce the dimensions of the lanes further down to a desired final width of the pre-manufactured strip, preferably 7.5 mm. A width of 7.5 mm has led to excellent heat distribution in the heat treatment, as found by the applicant. Performing the reduction of the dimensions in iterations is beneficial with regard to handling of the flexible material of the strip and with regard to different tools that may be used.

In an embodiment of the method of the invention the material of the center layer differs from the material of the inner surface layer and/or from the material of the outer surface layer. This typically leads to higher inhomogeneity in the bonding material at the interface between the center layer and the inner surface layer and/or the outer surface layer of the pre-manufactured strip. Consequently, the beneficial effects of the inventive method described above lead to particularly significant improvement of the bonding between the different materials. However, it shall be underlined that these beneficial effects also occur, if all layers are of the same material. This is due to the fact, that bonding material inhomogeneity at a bonding interface is technically inevitable at least to some degree. Here, even if the bonding is generally good in case of the same materials, the method of the invention allows for even further reduction of the remaining bonding material inhomogeneity.

Regarding the materials of the different layers, some preferred examples are provided below. Preferably, the center layer may be made of polyesters, such as polyethylene terephthalate (PET), polyamides (PA), higher density polyolefins, such as polypropylene (PP), or ethylene vinyl alcohol copolymers (EVOH). The inner and/or outer surface layers may be made of ethylene-based polyolefins, such as LLDPE or LDPE. In specifically preferred combinations, the center layer is made of PET and the inner and/or outer surface layers are made of LDPE and/ or LLDPE. It is also preferred to make the center layer of PA and the inner and/or outer surface layers of LDPE and/ or LLDPE. It is also preferred to make the center layer of EVOH and the inner and/or outer layers of LDPE and/or LLDPE. Preferably, the inner and outer layers are made of the same material, because this leads to the same bonding system between the center layer and the inner and outer surface layer, respectively. Thus, the heat treatment leads to equally good improvement of the material homogeneity at the bonding interface on both sides of the center layer of the manufactured strip.

In an embodiment of the method of the invention, the degree of transparency of the pre-manufactured strip is detected by a measurement device prior to the heat treatment and, based on the material of the pre-manufactured strip and the detected degree of transparency, a parameter or set of heat treatment parameters are selected from a plurality of reference heat treatment parameters, the selected parameter(s) lead to a pre-defined increase of the degree of transparency of the pre-manufactured strip during the heat treatment.

Based on this, the required degree of transparency and resistance against delamination, respectively, can be achieved at low technical effort.

There are various known measurement devices and methods, which are suitable to detect the degree of transparency. For example a colorimeter may be used. Another simply example is a light source being arranged on one side of the strip and a photo cell being arranged on an opposite side of the strip, wherein the photo cell detects the light reaching through the strip.

In an embodiment of the method of the invention, the plurality of reference heat treatment parameters are stored in a database and a control unit receives the degree of transparency detected by the measurement device, compares it to the content of the database, selects the heat treatment parameters leading to the pre-defined increase of the degree of transparency and controls the manufacturing process, accordingly.

This way, the process quality can be significantly enhanced and a high efficiency is achieved. The material of the strip may be manually provided to the control unit, for example by selection of a certain program upon setup of the control unit. In principle, the material could also be determined by a material analysis unit as known in the related art.

In an embodiment of the method of the invention, the degree of transparency of the strip is detected by a measurement device during the heat treatment and the heat treatment is stopped by a control unit, if a pre-defined degree of transparency of the strip is achieved.

This allows for tailoring a quantitatively specified degree of transparency of the strip at a high process stability level.

Detecting the degree of transparency of the pre-manufactured strip during and prior to the heat treatment can also be combined, leading to an even increased process quality.

In an embodiment of the method of the invention, the reference heat treatment parameters comprise at least a reference strip surface temperature value and a reference heat treatment duration value.

This means, any equipment used to execute the method of the invention is adjusted and configured according to achieve these heat treatment parameters.

Further exemplary heat treatment parameters that need to be adjusted or configured, accordingly, may comprise a heating power of a heat source used for the heat treatment, a relative speed of the heat source and the strip and a distance between the heat source and the strip. However, it shall be noted that these are secondary parameters that influence the achieved strip surface temperature and the duration this is achieved for.

In an embodiment of the method of the invention, a strip surface temperature value is detected on the inner and/or outer surface layers by a measurement device and is controlled by a control unit to match with a reference strip surface temperature value selected as a heat treatment parameter during the heat treatment.

This can be achieved by a thermal camera, for example, and further increases the process quality.

Preferably, both said inner surface layer and said outer surface layer are exposed to the heat treatment.

In an example, not covered by the claims, the strip surface temperature value is selected from an interval from 100 °C to 200 °C, preferably from °C to 150 °C and the heat treatment duration value is selected so as to achieve a degree of transparency of at least 0.5 after the heat treatment. Preferably, the degree of transparency is at least 0.6, further preferred at least 0.7, further preferred at least 0.8 and even further preferred at least 0.9 after the heat treatment.

Even more preferred, the strip surface temperature value is selected from an interval from110 °C to 180 °C, further preferred from120 °C to 160 °C and mostly preferred from130 °C to 150 °C. It shall be noted, that any temperature value covered by the interval from100 °C to 200 °C or any degree of transparency between 0.5 and 1, which is achievable by the use of available technical equipment, is also disclosed with regard to the method of the invention. The same applies for any sub-interval that can be defined in the interval from 100 °C to 200 °C or in an interval of the degree of transparency from 0.5 to 1.

In an embodiment of the method of the invention, the strip is moved during the heat treatment, relative a heat source used for the heat treatment and a measurement device.

This way, a flow manufacturing process can be realized allowing for efficient manufacturing of the strip.

In that case, the process parameters preferably include a speed value of this relative movement. Preferably, the speed value may replace the duration value of the heat treatment, as the duration value is implied by the speed value that determines how long the heat from the heat source is affecting the surface of the strip.

Preferably, one or more measurement devices and/or heat sources used to achieve and measure the temperature on the surface(s) of the strip are moved relative the strip.

Mostly preferred, the strip is moved, while the heat source(s) and heat measurement device(s) are static equipment.

Preferably, the speed value of the movement ranges in an interval [0.01 m/s; 0.04 m/s]. It shall be noted, that any speed value covered by that interval, which is achievable by available technical equipment, is also disclosed with regard to the method of the invention. The same applies for any sub-intervals that can be defined in the interval from0.01 m/s to 0.04 m/s.

In an embodiment of the method of the invention, the strip is moved in a flow manufacturing process at a speed selected from an interval from 0.01 m/s to 0.04 m/s.

In an embodiment of the method of the invention, the inner and outer surface layers of the pre-manufactured strip are made of PE and the center layer is made of PET or EVOH.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 shows an embodiment of a packaging container for packaging of liquid food products;
Fig. 2 shows an embodiment of a laminated packaging material, which is sealed by a strip;
Fig. 3 shows an embodiment of a strip for sealing a laminated packaging material in a cross-sectional view;
Fig. 4 shows an embodiment of a method of manufacturing a strip for sealing a laminated packaging material with reference to a device to execute the method; and
Fig. 5 shows the difference in appearance between a pre-manufactured strip and a heat treated strip ready for use.

### Detailed description

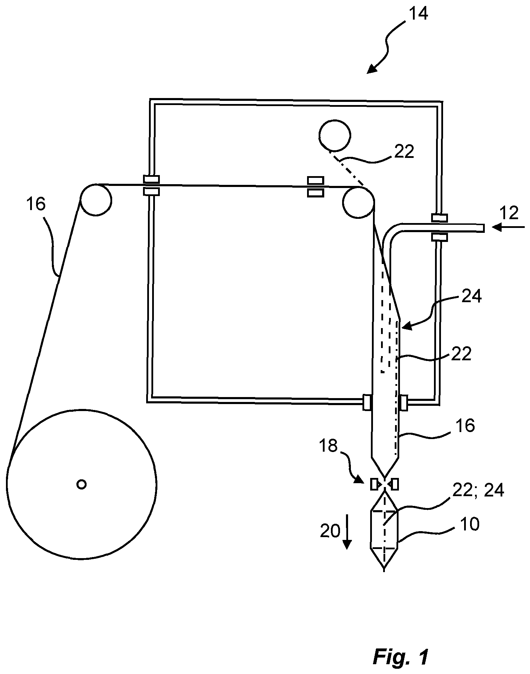

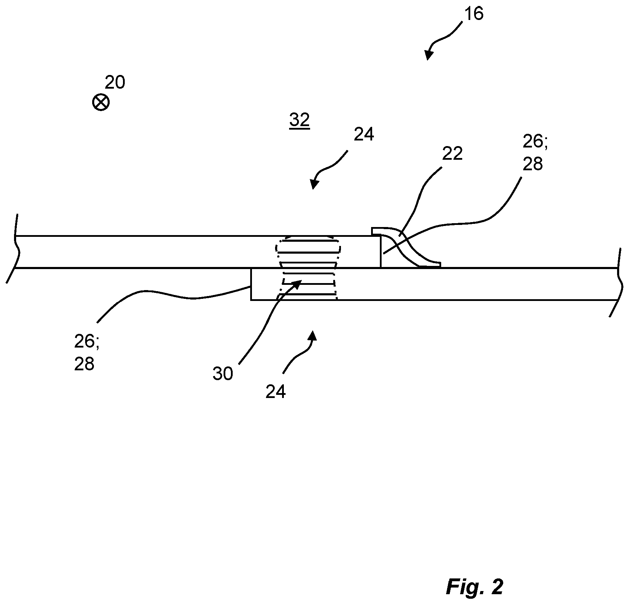

With reference to Fig. 1 an embodiment of a packaging container 10 for a liquid food product 12 is illustrated. For example, a not further specified packaging container producing machine 14 may deliver a laminated packaging material 16, from which the packaging container 10 can be made. The packaging container 10 can exemplarily be made by forming the laminated packaging material 16 to a tube structure featuring overlapping sections 24 (also see Fig. 2), which are welded together and which exhibit at least one exposed edge 26 (seen in Fig. 2), covered and sealed by a strip 22 (also see Figs. 2-5) according to the invention.

The thus formed laminated packaging material 16 is then filled with the liquid food product 12, sealed and cut off by respective sealing and cutting means 18 to close the packaging container 10.

For the purpose of further describing the present invention, a machine direction 20 is defined in Fig. 1, which reference will be made to in the following figures. The machine direction 20 refers to the fact that the laminated packaging material 16 is normally manufactured in a flow process that has a material feed direction, which is the machine direction 20 in other words.

Fig. 2 shows the laminated packaging material 16, from which a packaging container 10, for example such as shown in Fig. 1, can be formed. The laminated packaging material 16 is folded (folded sections not shown) to create overlapping sections 24, in which the laminated packaging material 16 is overlapping with two of its edges 26. The sections 24 are joined with each other, for example welded together. At the edges 26 of said overlapping sections 24, a cross-section 28 of the laminated packaging material 16 is revealed, wherein different layers 30 of the laminated packaging material 16 are exposed to the environment (as illustrated in the broken off section in Fig. 2). These layers are well known in laminated packaging materials 16 of the present type and may for example comprise a main layer made of paperboard, at least one barrier layer and sealing layers made of a polymer material, as well as surface coatings.

One of said cross-sections 28 is located on an inside 32 of the laminated packaging material 16, wherein the location of that inside 32 is merely an example, indicating the side of the laminated packaging material 16, which is intended to form the inside 32 of the packaging container 10, which is exposed to the liquid food product 12.

To protect the layers 30 of the laminated packaging material 16 in said cross-section 28 on the inside 32, said cross-section 28 is sealed by the strip 22. The location of the strip 22 on the laminated packaging material 16 and in the packaging container 10, respectively, is exemplarily and schematically shown in Fig. 1, as well. Merely as an example and to make reference to Fig. 1, the machine direction 20 is indicated in Fig. 2, too, thus indicating how the view of Fig. 2 corresponds to that of Fig. 1.

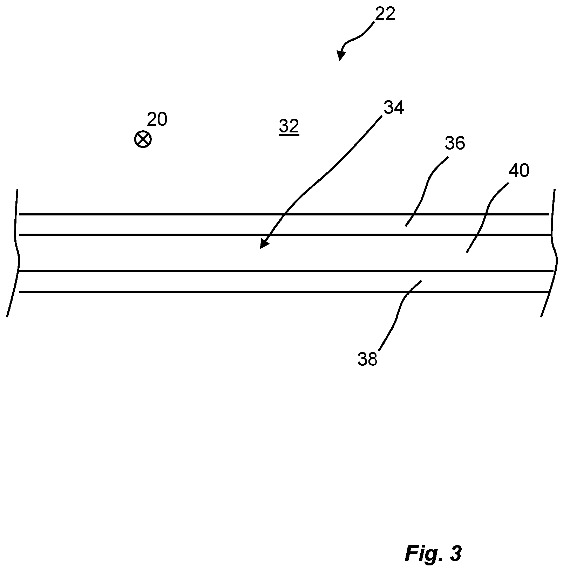

Fig. 3 shows an embodiment of a strip 22 in a cross-sectional view. The strip 22 comprises the plurality of layers 34, that are made of polymer material. Said layers 34 comprise at least an inner surface layer 36, an outer surface layer 38 and center layer 40. Merely as an example, the inner surface layer 36 is intended to face the liquid food product 12 on the inside 32 of the laminated packaging material 16 and the packaging container 10, respectively, as shown in Fig. 2.

In this example, the inner and outer surface layers 36, 38 of the strip 22 are made of PE and the center layer 40 is made of PET or EVOH. Between the layers 34 an adhesive may be present, which is not illustrated.

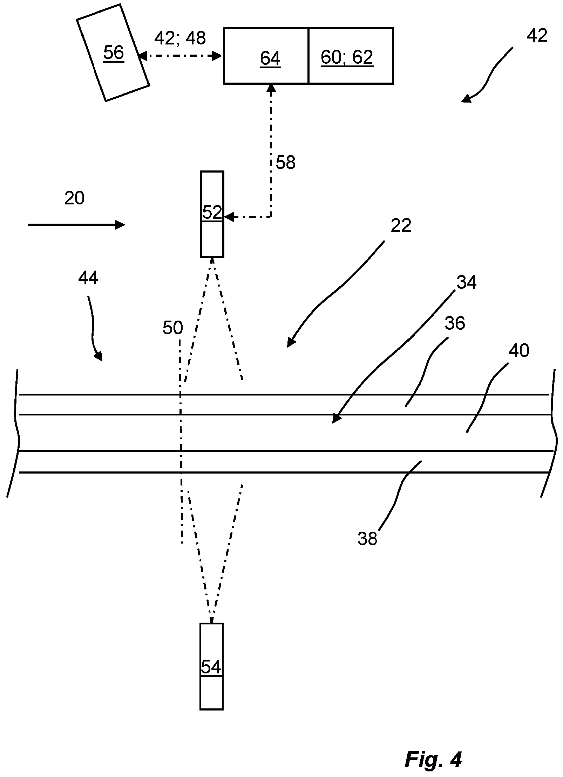

Now turning to Fig. 4, an embodiment of an inventive method of manufacturing the strip 22 for sealing the laminated packaging material 16 is shown, with reference to a device 42 being adapted and configured to execute the method.

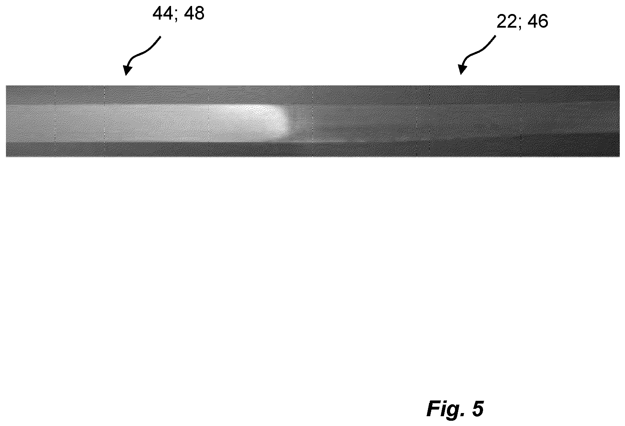

In a first step of the method, a pre-manufactured strip 44 is provided, comprising the plurality of layers 34 made of polymer material and comprising at least the inner surface layer 36, the outer surface layer 38 and the center layer 40. According to the invention, at least one of said inner and outer surface layers 36, 38 is exposed to a heat treatment effecting that a degree of transparency 46 (see Fig. 5) of the manufactured strip 22 is increased with regard to the degree of transparency 48 of the pre-manufactured strip 44. As indicated by reference line 50, it is referred to the pre-manufactured strip 44 prior to heat treatment and to the manufactured strip 22, once the heat treatment has begun. This means, the pre-manufactured strip 44 and the manufactured strip 22 are the same part, but feature different material properties before and after the heat treatment has begun.

The device 42 comprises a heat source 52 to deliver the thermal energy for the heat treatment. Preferably, both said inner surface layer 36 and said outer surface layer 38 are exposed to the heat treatment. For that purpose, the device 42 may comprise a second heat source 54, even though the heat source 52 may also be designed to heat up both surface layers 36 and 38 of the strip 22. For example, the heat source 52 may be designed as a heat chamber to locally cover the entire strip 22.

Preferably, the degree of transparency 48 of the pre-manufactured strip 44 is detected by a measurement device 56 prior to the heat treatment. Then, based on the known material of the pre-manufactured strip 44 and the detected degree of transparency 48, a selection of heat treatment parameters 58 is done from a plurality of reference heat treatment parameters 60, which lead to a pre-defined increase of the degree of transparency 48 of the pre-manufactured strip 44 during the heat treatment. The manufactured strip 22 will then feature that increased degree of transparency 46. It is preferred, that the reference heat treatment parameters 60 comprise at least a reference strip surface temperature value and a reference heat treatment duration value.

Preferably, the plurality of reference heat treatment parameters 60 are stored in a database 62 and a control unit 64 receives the degree of transparency 48 detected by the measurement device 56, compares it to the content of the database 62, selects the heat treatment parameters 58 leading to the pre-defined increase of the degree of transparency 48 and controls the manufacturing process, accordingly.

Preferably, the degree of transparency 46 of the manufactured strip 22 is detected by a measurement device 56 during the heat treatment and the heat treatment is stopped by a control unit 64, if a pre-defined degree of transparency 46 of the strip 22 is achieved. Preferably, the same measurement device 56 and control unit 64 as described above are used for this purpose.

During the heat treatment, it is beneficial to detect a strip surface temperature value on the inner and/or outer surface layers 36, 38 by a measurement device 56 and to control it by a control unit 64 to match with the reference strip surface temperature value selected as a heat treatment parameter 58 during the heat treatment. Preferably, the same measurement device 56 and control unit 64 as described above are used for this purpose. For multiple measurement purposes, the measurement device 56 may comprise respective measurement modules, for example for transparency and temperature measurement.

During the heat treatment, the strip 22 may be moved relative the heat source 52, 54 used for the heat treatment and/or the measurement device 56, which allows for the heat treatment being embedded in a flow manufacturing process. For the purpose of providing an example, the machine direction 20 corresponding to the previous figures is shown in Fig. 4, as the inventive method may be combined with the manufacturing of the packaging container 10.

Finally turning to Fig. 5, an example for the increased degree of transparency 46 of the manufactured strip 22 compared to the initial degree of transparency 48 of the pre-manufactured strip 44 is provided. The shown sample pre-manufactured strip 44 and sample manufactured strip 22 are exemplarily identic with the pre-manufactured strip 44/strip 22 as described above and have been moved in a flow manufacturing process relative the heat source 52 at a speed selected from an interval [0.01 m/s; 0.04 m/s]. At the same time, the strip surface temperature value has been selected from an interval [140 °C; 150 °C]. All possible combinations of any of the values covered by these intervals, which are executable by known technical means, have achieved an increase in the degree of transparency 46 of the manufactured strip 22 with regard to the degree of transparency 48 of the pre-manufactured strip 44.

The illustration in Fig. 5 shows two specifically good test results based on the following set of heat treatment parameters 58, that have both led to the same increased degree of transparency 46.

For a first test, a set of heat treatment parameters 58 has been selected as (speed, the strip surface temperature) = (0,0136 m/s, 135 °C).

For a second test, a set of heat treatment parameters 58 has been selected as (speed, the strip surface temperature) = (0,036 m/s, 150 °C).

A heat influence zone of the heat source 52 on the inner surface layer 36 has been selected as a circle with a diameter of 25 mm.

In Fig. 5 it can be seen, that the pre-manufactured strip 44 appears opaque, because the black colored background is not significantly shining through the pre-manufactured strip 44. It can further be seen, that the heat treated strip 22 appears transparent, as the black colored background is significantly shining through the strip 22.

The respective degrees of transparency 46, 48 have been measured with a colorimeter, which is a well-known measurement device in the art that measures three values with the sample part placed in front of a black background. The measured values are:
- an "L index", representing a brightness, ranging from 0 (black) to 100 (white);
- an "a index", ranging from red (positive value) to green (negative value); and
- a "b index", ranging from yellow (positive value) to blue (negative value). For both the above specified tests, the (L, a, b) values have been measured on the pre-manufactured strip 44 as about (29.87, 3.3, 2.42) in front of a black background. For the heat treated strip 22, the same values have been measured as about (34.58, 3.11, 2.72) in front of the black background, thus demonstrating a significant increase in the brightness, which represents an increase in the degree of transparency 46 of the manufactured strip 22.

From the description above follows that, although various embodiments of the invention have been described and shown, the invention is not restricted thereto, but may also be embodied in other ways within the scope of the subject-matter defined in the following claims.

### Reference signs

- 10: packaging container
- 12: liquid food product
- 14: packaging container producing machine
- 16: laminated packaging material
- 18: cutting means
- 20: machine direction
- 22: manufactured strip
- 24: overlapping sections
- 26: edge
- 28: cross-section
- 30: layers of the laminated packaging material
- 32: inside
- 34: layers of the strip
- 36: inner surface layer
- 38: outer surface layer
- 40: center layer
- 42: device
- 44: pre-manufactured strip
- 46: degree of transparency of the manufactured strip
- 48: degree of transparency of the pre-manufactured strip
- 50: reference line
- 52: heat source
- 54: heat source
- 56: measurement device
- 58: heat treatment parameters
- 60: reference heat treatment parameters
- 62: database
- 64: control unit

## Claims

1. Method of manufacturing a strip (22) for sealing a laminated packaging material (16) for liquid food products (12), wherein a pre-manufactured strip (44) comprising a plurality of layers (34) made of polymer material is provided, said layers (34) comprising at least an inner surface layer (36), an outer surface layer (38) and center layer (40), at least one of said inner and outer surface layers (36; 38) being exposed to a heat treatment effecting that a degree of transparency (46) of the manufactured strip (22) is increased with regard to the degree of transparency (48) of the pre-manufactured strip (44), **characterized in that** the degree of transparency (48) of the pre-manufactured strip (44) is detected by a measurement device (56) prior to the heat treatment and, based on the material of the pre-manufactured strip (44) and the detected degree of transparency (48), a parameter or set of heat treatment parameters (58) are selected from a plurality of reference heat treatment parameters (60), the selected parameter(s) lead to a pre-defined increase of the degree of transparency (48) of the pre-manufactured strip (44) during the heat treatment, wherein the reference heat treatment parameters (60) comprise at least a reference strip surface temperature value and a reference heat treatment duration value and wherein a strip surface temperature value is detected on the inner and/or outer surface layers (36; 38) by a measurement device (56) and is controlled by a control unit (64) to match with a reference strip surface temperature value selected as a heat treatment parameter (58) during the heat treatment.

2. Method according to claim 1, wherein the material of the center layer (40) differs from the material of the inner surface layer (36) and/or from the material of the outer surface layer (38).

3. Method according to any one of claims 1 or 2, wherein the plurality of reference heat treatment parameters (60) are stored in a database (62) and a control unit (64) receives the degree of transparency (48) detected by the measurement device (56), compares it to the content of the database (62), selects the heat treatment parameters (58) leading to the pre-defined increase of the degree of transparency (48) and controls the manufacturing process, accordingly.

4. Method according to any of the preceding claims, wherein the degree of transparency (46) of the strip (22) is detected by a measurement device (56) during the heat treatment and the heat treatment is stopped by a control unit (64), if a pre-defined degree of transparency (46) of the strip (22) is achieved.

5. Method according to any of the preceding claims, wherein both said inner surface layer (36) and said outer surface layer (38) are exposed to the heat treatment.

6. Method according to any of the preceding claims, wherein the strip (22; 44) is moved during the heat treatment, relative a heat source (52; 54) used for the heat treatment and a measurement device (56).

7. Method according to claim 6, wherein the strip (22; 44) is moved in a flow manufacturing process at a speed selected from an interval from 0.01 m/s to 0.04 m/s.

8. Method according to any of the preceding claims, wherein the inner and outer surface layers (36; 38) of the pre-manufactured strip (44) are made of PE and center layer (40) is made of PET or EVOH.

## Patentansprüche

1. Verfahren zum Herstellen eines Streifens (22) zum Versiegeln eines laminierten Verpackungsmaterials (16) für flüssige Lebensmittelprodukte (12), wobei ein vorgefertigter Streifen (44) bereitgestellt wird, der eine Vielzahl Schichten (34) umfasst, die aus Polymermaterial angefertigt sind, wobei die Schichten (34) mindestens eine innere Oberflächenschicht (36), eine äußere Oberflächenschicht (38) und eine Mittelschicht (40) umfassen, wobei mindestens eine der inneren und der äußeren Oberflächenschicht (36; 38) einer Wärmebehandlung ausgesetzt wird, die bewirkt, dass ein Grad an Transparenz (46) des hergestellten Streifens (22) in Bezug auf den Transparenzgrad (48) des vorgefertigten Streifens (44) erhöht wird, **dadurch gekennzeichnet, dass** der Transparenzgrad (48) des vorgefertigten Streifens (44) vor der Wärmebehandlung von einer Messvorrichtung (56) detektiert wird und, basierend auf dem Material des vorgefertigten Streifens (44) und dem detektierten Transparenzgrad (48), ein Parameter oder ein Satz Wärmebehandlungsparameter (58) aus einer Vielzahl Referenzwärmebehandlungsparameter (60) ausgewählt wird, der/die ausgewählte(n) Parameter zu einer vordefinierten Erhöhung des Transparenzgrads (48) des vorgefertigten Streifens (44) während der Wärmebehandlung führt/führen, wobei die Referenzwärmebehandlungsparameter (60) mindestens einen Referenzstreifenoberflächentemperaturwert und einen Referenzwärmebehandlungsdauerwert umfassen und wobei ein Streifenoberflächentemperaturwert auf der inneren und/oder auf der äußeren Oberflächenschicht (36; 38) von einer Messvorrichtung (56) detektiert wird und durch eine Steuereinheit (64) gesteuert wird, um mit einem Referenzstreifenoberflächentemperaturwert übereinzustimmen, der als ein Wärmebehandlungsparameter (58) während der Wärmebehandlung ausgewählt wurde.

2. Verfahren nach Anspruch 1, wobei das Material der Mittelschicht (40) verschieden ist von dem Material der inneren Oberflächenschicht (36) und/oder von dem Material der äußeren Oberflächenschicht (38).

3. Verfahren nach einem der Ansprüche 1 oder 2, wobei die mehreren Referenzwärmebehandlungsparameter (60) in einer Datenbank (62) gespeichert sind und eine Steuereinheit (64) den von der Messvorrichtung (56) detektierten Transparenzgrad (48) empfängt, ihn mit dem Inhalt der Datenbank (62) vergleicht, die Wärmebehandlungsparameter (58) auswählt, die zu der vordefinierten Erhöhung des Transparenzgrads (48) führen, und den Herstellungsprozess entsprechend steuert.

4. Verfahren nach einem der vorhergehenden Ansprüche, wobei der Transparenzgrad (46) des Streifens (22) von einer Messvorrichtung (56) während der Wärmebehandlung detektiert wird und die Wärmebehandlung von einer Steuereinheit (64) gestoppt wird, wenn ein vordefinierter Transparenzgrad (46) des Streifens (22) erzielt ist.

5. Verfahren nach einem der vorhergehenden Ansprüche, wobei sowohl die innere Oberflächenschicht (36) als auch die äußere Oberflächenschicht (38) der Wärmebehandlung ausgesetzt werden.

6. Verfahren nach einem der vorhergehenden Ansprüche, wobei der Streifen (22; 44) während der Wärmebehandlung relativ zu einer Wärmequelle (52; 54), die für die Wärmebehandlung verwendet wird, und einer Messvorrichtung (56) bewegt wird.

7. Verfahren nach Anspruch 6, wobei der Streifen (22; 44) in einem Fließherstellungsprozess mit einer Geschwindigkeit bewegt wird, die aus einem Intervall von 0,01 m/s bis 0,04 m/s ausgewählt ist.

8. Verfahren nach einem der vorhergehenden Ansprüche, wobei die innere und die äußere Oberflächenschicht (36; 38) des vorgefertigten Streifens (44) aus PE angefertigt sind und die Mittelschicht (40) aus PET oder EVOH angefertigt ist.

## Revendications

1. Procédé de fabrication d'une bande (22) pour sceller un matériau d'emballage stratifié (16) pour produits alimentaires liquides (12), dans lequel une bande préfabriquée (44) comprenant une pluralité de couches (34) en matériau polymère est prévue, lesdites couches (34) comprenant au moins une couche de surface intérieure (36), une couche de surface extérieure (38) et une couche centrale (40), au moins une desdites couches de surface intérieure et extérieure (36 ; 38) étant soumise à un traitement thermique qui a pour effet d'augmenter le degré de transparence (46) de la bande fabriquée (22) par rapport au degré de transparence (48) de la bande préfabriquée (44), **caractérisé en ce que** le degré de transparence (48) de la bande préfabriquée (44) est détecté par un dispositif de mesure (56) avant le traitement thermique et, sur la base du matériau de la bande préfabriquée (44) et du degré de transparence (48) détecté, un paramètre ou un ensemble de paramètres de traitement thermique (58) sont sélectionnés parmi une pluralité de paramètres de traitement thermique de référence (60), le ou les paramètres sélectionnés conduisant à une augmentation prédéfinie du degré de transparence (48) de la bande préfabriquée (44) pendant le traitement thermique, les paramètres de traitement thermique de référence (60) comprenant au moins une valeur de température de surface de bande de référence et une valeur de durée de traitement thermique de référence et une valeur de température de surface de bande étant détectée sur les couches de surface intérieure et/ou extérieure (36 ; 38) par un dispositif de mesure (56) et étant commandée par une unité de commande (64) pour correspondre à une valeur de température de surface de bande de référence sélectionnée comme paramètre de traitement thermique (58) pendant le traitement thermique.

2. Procédé selon la revendication 1, le matériau de la couche centrale (40) différant du matériau de la couche de surface intérieure (36) et/ou du matériau de la couche de surface extérieure (38).

3. Procédé selon l'une quelconque des revendications 1 ou 2, dans lequel la pluralité de paramètres de traitement thermique de référence (60) sont mémorisés dans une base de données (62) et une unité de commande (64) reçoit le degré de transparence (48) détecté par le dispositif de mesure (56), le compare au contenu de la base de données (62), sélectionne les paramètres de traitement thermique (58) conduisant à l'augmentation prédéfinie du degré de transparence (48) et commande le processus de fabrication en conséquence.

4. Procédé selon l'une quelconque des revendications précédentes, le degré de transparence (46) de la bande (22) étant détecté par un dispositif de mesure (56) pendant le traitement thermique et le traitement thermique étant arrêté par une unité de commande (64), si un degré de transparence (46) prédéfini de la bande (22) est atteint.

5. Procédé selon l'une quelconque des revendications précédentes, ladite couche de surface intérieure (36) et ladite couche de surface extérieure (38) étant toutes deux exposées au traitement thermique.

6. Procédé selon l'une quelconque des revendications précédentes, la bande (22 ; 44) étant déplacée pendant le traitement thermique, par rapport à une source de chaleur (52 ; 54) utilisée pour le traitement thermique et à un dispositif de mesure (56).

7. Procédé selon la revendication 6, la bande (22 ; 44) étant déplacée dans un processus de fabrication par écoulement à une vitesse choisie dans un intervalle de 0,01 m/s à 0,04 m/s.

8. Procédé selon l'une quelconque des revendications précédentes, les couches de surface intérieure et extérieure (36 ; 38) de la bande préfabriquée (44) étant constituées de PE et la couche centrale (40) étant constituée de PET ou d'EVOH.
